Europäisches Patentamt

European Patent Office

Office européen des brevets

(19)

(11) **EP 0 829 726 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.[7]: $G01P\ 5/00$, $G01P\ 5/18$

(21) Anmeldenummer: **97111404.6**

(22) Anmeldetag: **05.07.1997**

(54) **Verfahren und Vorrichtung zum Erfassen 3-dimensionaler Strömungsstrukturen**

Method and apparatus for determining three dimensional flow structures

Procédé et dispositif pour enregistrer des structures de courant tridimensionnelles

(84) Benannte Vertragsstaaten:
**CH DE ES FR GB IT LI SE**

(30) Priorität: **05.09.1996 DE 19635985**

(43) Veröffentlichungstag der Anmeldung:
**18.03.1998 Patentblatt 1998/12**

(73) Patentinhaber: **ROBERT BOSCH GMBH**
**70442 Stuttgart (DE)**

(72) Erfinder:
• **Arndt, Stefan, Dr.**
 **70569 Stuttgart (DE)**
• **Reymann, Klaus, Dr.**
 **70839 Gerlingen (DE)**
• **Huebel, Michael, Dr.**
 **70839 Gerlingen (DE)**

(56) Entgegenhaltungen:
**DE-A- 4 408 072**  **FR-A- 2 582 403**
**US-A- 5 491 642**

EP 0 829 726 B1

**Beschreibung**

Stand der Technik

Die Erfindung betrifft ein Verfahren zum Erfassen 3-dimensionaler Strömungsstrukturen. Darüber hinaus betrifft die Erfindung eine Vorrichtung zum Erfassen 3-dimensionaler Strömungsstrukturen mit einer Lichtquelle zum Erzeugen einer Lichtschnittebene, einer der Lichtschnittebene zugeordneten Aufnahmeeinrichtung zum Erfassen von Streulicht, das ein Teilchen beim Durchqueren der Lichtschnittebene erzeugt, und mit einer Auswerte- und Steuereinrichtung.

Aus dem Stand der Technik sind allgemein Strömungsanemometer, beispielsweise Laserdoppleranemometer bekannt, die ein punktuelles Vermessen von Strömungsfeldern erlauben. Aufgrund der lediglich punktuellen Vermessung sind diese Verfahren sehr zeitaufwendig. Zur simultanen Erfassung räumlicher Turbulenzstrukturen sind daher Ganzfeldverfahren unerläßlich.

Hier sind bisher lediglich 2-dimensionale Verfahren, wie das Laser-Lichtschnittverfahren mit Echtzeitvektorisierung und die Particle Image Velocimetry (PIV) bekannt. Diese Verfahren erfordern jedoch ein sequentielles Abtasten des Strömungsfeldes, in dem Sinne, daß räumliche Strukturen durch Aneinanderreihen von mehreren, zeitlich aufeinanderfolgend aufzunehmenden Lichtschnittebenen untersucht werden müssen.

Ein ohnliches aber 3-dimensionales Verfahren und die dazu nötige Vorrichtung sind beispielsweise in DE 44 08 072 A gezeigt.

Der Nachteil dieser Verfahren liegt darin, daß sie bei vielen technisch relevanten Strömungsproblemen nicht anwendbar sind, insbesondere dann, wenn die Strömung instationär ist und die Geschwindigkeitskomponenten senkrecht zur Lichtschnittebene (Untersuchungsebene) groß sind, und der apparative Aufbau aufgrund mangelnder optischer Möglichkeiten Lichtschnittebenen in Richtung der Hauptströmung nicht zuläßt.

Vorteile der Erfindung

Das Verfahren mit den Merkmalen des Anspruchs 1 beziehungsweise die Vorrichtung mit den Merkmalen des Anspruchs 7 haben demgegenüber den Vorteil, daß auch bisher nicht analysierbare Strömungsfelder 3-dimensional erfaßbar sind. Dies wird insbesondere dadurch erreicht, daß neben einer Lichtschnittebene weitere Lichtschnittebenen unterschiedlicher Wellenlänge parallel und räumlich versetzt zueinander erzeugt werden. Diese Mehrschichtanordnung von Lichtschnittebenen erlaubt die Bestimmung der dritten Geschwindigkeitskomponente, ohne das Strömungsfeld sequentiell abtasten zu müssen.

Als besonders vorteilhaft hat sich herausgestellt, wenn das Licht zur Erzeugung der Lichtschnittebenen zeitabhängig intensitätsmoduliert, zum Beispiel mit einer Braggzelle, wird. Diese Intensitätsmodulation findet sich entsprechend auch im Streulicht der bewegten Teilchen (Tracerpartikel) im Strömungsfeld wieder. Dadurch läßt sich eindeutig Anfangs-, Endpunkt und Richtung der Streuteilchen auf der Aufnahme identifizieren (Pfeilkodierung).

In einer Weiterbildung der Erfindung ist zur Erzeugung der Lichtschnittebenen eine einzige Lichtquelle vorgesehen, die Licht unterschiedlicher Wellenlängen, vorzugsweise Laser, ausstrahlt, wobei ein Farbteiler die Aufteilung des mehrfarbigen Lichts in die einzelnen Wellenlängen vornimmt.

In einer weiteren Ausführungsform sind statt der einen Lichtquelle mehrere Lichtquellen, vorzugsweise Laser, vorgesehen, die jeweils eine andere Wellenlänge aufweisen und jeweils eine Lichtschnittebene erzeugen.

Vorzugsweise umfassen die den Lichtschnittebenen zugeordneten Aufnahmevorrichtungen kostengünstige CCD-Arrays, die das aufgenommene Bild einem Rechner zur Weiterverarbeitung zuführen.

In einer Weiterbildung der Erfindung ist jeder Aufnahmevorrichtung eine Justiereinrichtung zugeordnet, die ein genaues Fokussieren auf die entsprechende Lichtschnittebene erlaubt. Damit läßt sich die Qualität des Meßergebnisses weiter erhöhen.

Da vorzugsweise mehrere CCD-Arrays zur Erfassung des in den Lichtschnittebenen erzeugten Streulichts eingesetzt werden, müssen Monochromatoren bzw. Interferenzfilter im Strahlengang der CCD-Arrays vorgeschaltet werden, um Streulicht der nicht zugeordneten Lichtschnittebenen wegzufiltern.

Vorteilhaft ist es darüber hinaus, die Aufnahmevorrichtungen durch eine einzige Farbvideo- oder Farbfotokamera zu ersetzen, die anhand der erfaßten Farbe des Streulichts eine Zuordnung zu der jeweiligen Lichtschnittebene durchführt. Damit ist eine Vereinfachung des Aufbaus möglich.

Eine alternative Möglichkeit besteht im Aufbau eines breiten Lichtschnitts mit kontinuierlicher Farbvariation (in dritter Dimension) und der Erfassung des Streulichts mit einer Farbvideokamera. Durch die Wahl eines geeigneten Objektivs bzw. durch Abblenden ist eine scharfe Abbildung der gesamten Lichtschnittbreite zu erzielen. Als Lichtquelle kann eine intensive Weißlichtquelle oder ein Weißlichtlaser mit nachgeschalteter spektraler Zerlegung (Prisma, Gitter) und Lichtschnittoptik dienen.

Weitere Vorteile und Ausgestaltungen der Erfindung ergeben sich aus den übrigen Unteransprüchen.

Zeichnungen

Die Erfindung wird nun anhand von Ausführungsbeispielen mit Bezug auf die Zeichnungen näher beschrieben. Dabei zeigen:

Figuren 1a,b      eine schematische Darstellung der erfindungsgemäßen Vorrichtung und der von der Vorrichtung erfaßten Bilder;

Figuren 2a-d      eine schematische Darstellung der erfindungsgemäßen Vorrichtung zur Erläuterung der Berechnung von Geschwindigkeitskomponenten, und

Figuren 3a-d      eine schematische Darstellung eines weiteren Ausführungsbeispiels der Erfindung, sowie der Diagramme zur Erläuterung des Meßverfahrens.

Ausführungsbeispiele

Eine Meßvorrichtung 1 umfaßt einen Ar-Ionen-Laser 3, der u.a. Licht mit den Wellenlängen 476,5 nm, 488 nm, und 514 nm erzeugt. Das vom Laser erzeugte Licht wird einem Farbteiler 5 zugeführt, der das Licht in die einzelnen Farben beziehungsweise Wellenlängen zerlegt. Die zerlegte Lichtstrahlung wird dann jeweils einer Optik 7.1, 7.2 beziehungsweise 7.3 zugeführt, die sogenannte Lichtschnittebenen 9 erzeugen.

Bedingt durch die Farbtrennung unterscheiden sich die drei Lichtschnittebenen 9.1, 9.2, 9.3 eindeutig durch ihre Wellenlänge.

Den Lichtschnittebenen zugeordnet ist ein Objektiv 11, das von den Lichtschnittebenen 9 kommendes Licht gebündelt einem Strahlteiler 13 zuführt. Der Strahlteiler 13 hat die Aufgabe, das ankommende Licht den drei Aufnahmevorrichtungen 15 zuzuleiten. Eine Fokussierung der einzelnen Aufnahmevorrichtungen auf die jeweilige Schnittebene erfolgt mittels Justiereinrichtungen 17.1, 17.2 und 17.3. Damit läßt sich eine eindeutige Zuordnung einer Aufnahmevorrichtung 15 zu einer Lichtschnittebene 9 erzielen.

Im gezeigten Ausführungsbeispiel ist dabei die Aufnahmevorrichtung 15.1 der Lichtschnittebene 9.1, die Aufnahmevorrichtung 15.2 der Lichtschnittebene 9.2 und die Aufnahmevorrichtung 15.3 der Lichtschnittebene 9.3 zugeordnet.

Darüber hinaus ist jeder Aufnahmevorrichtung 15 ein Filter beziehungsweise ein Monochromator 19 vorgeschaltet, der Licht unerwünschter Wellenlänge nicht durchläßt. Im vorliegenden Fall sind die unerwünschten Wellenlängen jene, die die jeweils anderen Aufnahmevorrichtungen aufnehmen.

Die Aufnahme der Lichtstrahlen aus den Lichtschnittebenen erfolgt in den Aufnahmevorrichtungen durch nicht dargestellte CCD-Arrays, die ihre Bildinformationen dann einem nur schematisch gezeigten Rechner 21 zur Auswertung und Weiterverarbeitung, insbesondere zur Digitalisierung und Speicherung zuführen.

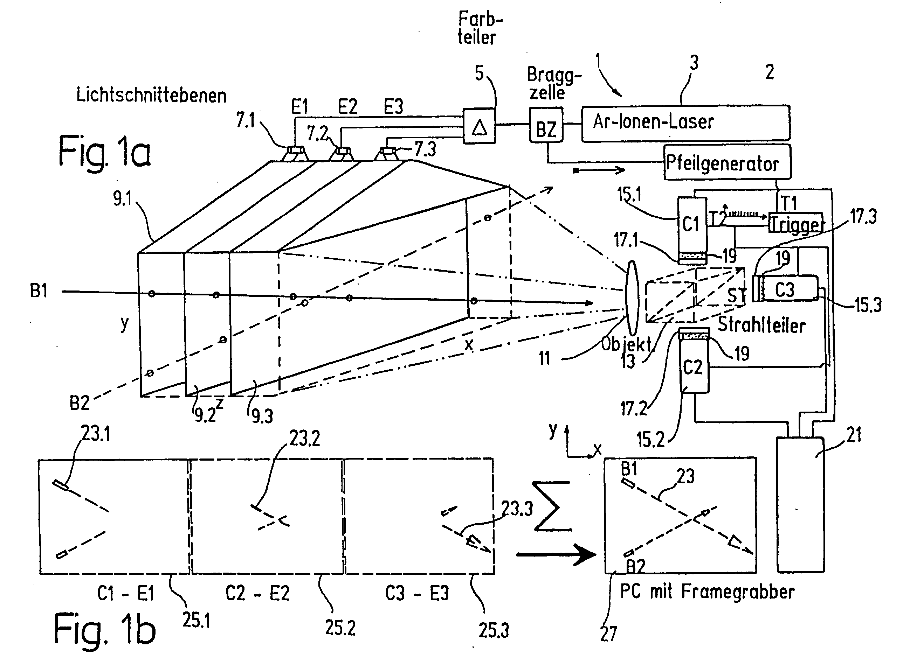

Die Funktion der Vorrichtung 1 soll nun anhand der Figuren 1b bis 3 erläutert werden.

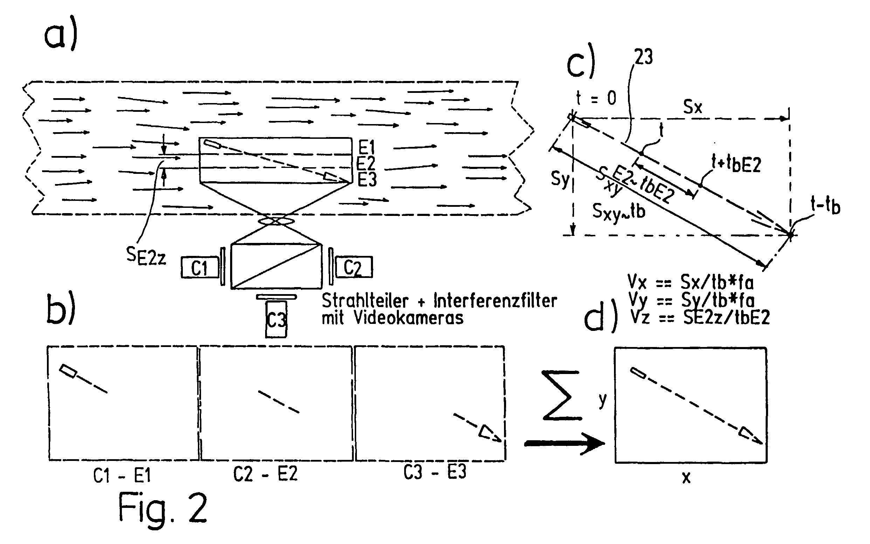

In dem zu analysierenden Strömungsfeld, wie es beispielsweise in Figur 2a dargestellt ist, werden die Lichtschnittebenen 9 parallel zueinander und räumlich versetzt erzeugt, wobei deren Längsachse in Richtung der Hauptströmung zeigt.

Zur Messung des Strömungsfeldes werden nun durch die Strömung mitbewegte Teilchen benutzt, die entweder bereits natürlich vorhanden sind oder aber gezielt zugesetzt werden. Beim Durchqueren einer Lichtschnittebene wird an jedem Teilchen Licht reflektiert, das als Streulicht zum Objektiv 11 gelangt. Solches Streulicht läßt sich vom Zeitpunkt des Eintritts beispielsweise in die Lichtschnittebene 9.1 bis zum Austritt aus der Lichtschnittebene 9.3 durch die drei Aufnahmevorrichtungen 15 erfassen. Die von den CCD-Arrays der Aufnahmevorrichtungen 15 erzeugten Bilder liefern also eine Teilchenspur 23, wie sie beispielhaft in der Figur 1b dargestellt ist. Dabei entspricht die Teilchenspur 23.1 dem Weg in der Lichtschnittebene 9.1, die Teilchenspur 23.2 dem Weg in der Lichtschnittebene 9.2 und die Teilchenspur 23.3 dem Weg in der Lichtschnittebene 9.3. Das zeichnerisch hervorgehobene Ende der Teilchenspur 23.1 und die Pfeilspitze der Teilchenspur 23.3 ergibt sich durch die zeitliche Intensitätsmodulation des Laserlichtes (Pfeilkodierung) und zeigt demnach auch an, ob sich das zu untersuchende Teilchen in der gesamten Belichtungszeit im Bereich der Lichtschnittebenen befunden hat. Das heißt, daß das detektierte Teilchen am Anfang der Belichtungszeit sich am Anfang der Teilchenspur 23.1 befand und am Ende der Belichtungszeit an der Pfeilspitze der Teilchenspur 23.3.

Diese drei Einzelbilder 25.1, 25.2 und 25.3 setzt der Rechner 9 für die Auswertung zu einem gemeinsamen Bild 27 zusammen. Die sich dann ergebende gesamte Teilchenspur 23 stellt nun ein direktes Abbild des Bewegungsverlaufs des Teilchens in der x-/y-Ebene dar.

Mit Hilfe der zuvor genannten Belichtungszeit $t_b$ und einem Abbildungsmaßstab $f_a$ der gesamten Aufnahmeoptik lassen sich die Geschwindigkeitskomponenten in x- und y-Richtung $v_x$ und $v_y$ berechnen. Zur Verdeutlichung ist in Figur 2a ein Diagramm dargestellt, in dem die x-/y-Wegkomponenten $S_x$ und $S_y$ der Teilchenspur 23 eingezeichnet sind. Anhand dieser Parameter ergeben sich folgende Geschwindigkeitskomponenten:

$$v_x = (S_x/t_b)\, f_a$$

$$v_y = (S_y/t_b)\, f_a.$$

Die Berechnung der dritten Geschwindigkeitskomponente $v_z$ wird indirekt anhand der Aufenthaltsdauer des Teilchens, beispielsweise in der mittleren Lichtschnittebene 9.2, ermittelt. Hierzu wird der Teilchenspur eine zusätzliche Zeitstruktur, etwa durch Mehrfachbelichtung oder Modulation der Laserstrahlung, aufgeprägt. Daraus ergibt sich dann die in dem Diagramm der Figur 2a gezeigte Zeit $t_{bE2}$, die der Aufenthaltsdauer des Teilchens in der Lichtschnittebene 9.2 entspricht. Mit Hilfe des in dieser Lichtschnittebene zurückgelegten Weges $S_{E2z}$ in z-Richtung berechnet sich die dritte Geschwindigkeitskomponente zu

$$v_z = S_{E2z}/t_{bE2}.$$

Die Aufenthaltsdauer $t_{bE2}$ kann darüber hinaus auch durch eine Verhältnisbildung der Teilchenspur 23.2 der mittleren Lichtschnittebene 9.2 zur Gesamtlänge der Teilchenspur 23 berechnet werden.

So entspricht das Verhältnis von Aufenthaltsdauer $t_{bE2}$ und Belichtungszeit $t_b$ dem Verhältnis der Länge $S_{E2z}$ der Teilchenspur 23.2 und der Gesamtlänge der Teilchenspur 23. Voraussetzung hierfür ist jedoch, daß die Spur in allen drei Lichtschnittebenen nachgewiesen wird und Anfang und Ende in den beiden außenliegenden Ebenen zu finden sind.

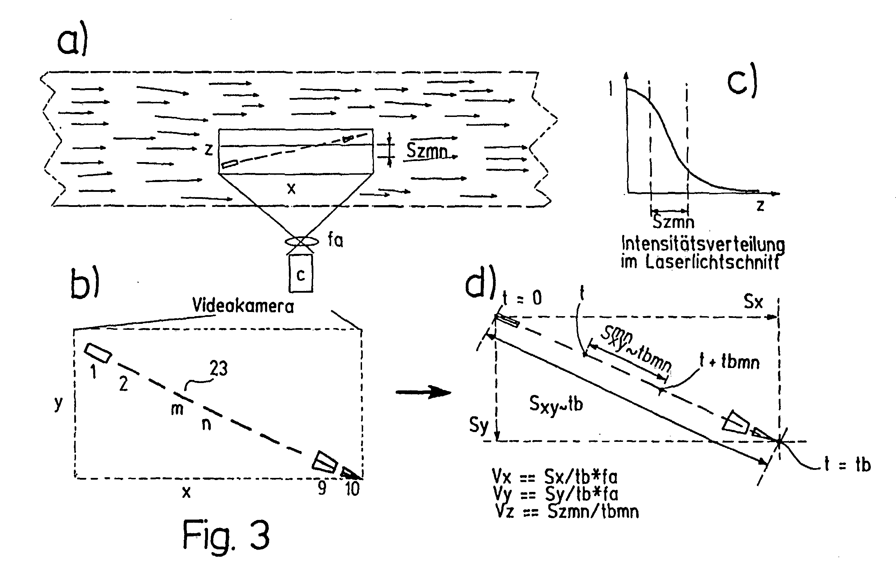

Eine weitere Möglichkeit zur Vermessung der z-Komponente ist in Figur 3 dargestellt. Hierbei wird eine Lichtschnittebene in z-Richtung asymmetrisch intensitätsmoduliert, wobei der Lichtintensitätsverlauf in dem in Figur 3c dargestellten Diagramm angegeben ist. Es handelt sich hierbei um eine halbe Gauss-Kurve.

Die Aufnahmevorrichtung, im vorliegenden Ausführungsbeispiel eine Videokamera, ist so ausgelegt, daß sie auch unterschiedliche Lichtintensitäten erfassen kann. Anhand der erfaßten Lichtintensität läßt sich auf die z-Position des Teilchens innerhalb der Lichtschnittebene schließen. So läßt sich die durchlaufene Strecke $S_{zmn}$ in z-Richtung anhand der Intensitätsverteilung leicht ermitteln, indem die Intensitätswerte vom Anfangs- und vom Endpunkt der Teilchenspur 23 herangezogen werden. Mit Hilfe dieses Wertes $S_{zmn}$ ergibt sich die Geschwindigkeitskomponente wie folgt:

$$v_z = S_{zmn}/t_{bmn}.$$

Selbstverständlich können zur Ermittlung der z-Komponente auch andere Intensitätswerte der Teilchenspur 23 herangezogen werden, beispielsweise der Intensitätswert beim Eintritt in die mittlere Lichtschnittebene und der Intensitätswert beim Austritt aus der mittleren Lichtschnittebene.

Neben der im Ausführungsbeispiel gezeigten Aufnahmeoptik, die drei Aufnahmevorrichtungen umfaßt, kann stattdessen ein Aufnahmesystem mit nur einer Aufnahmevorrichtung, beispielsweise einer Kamera beziehungsweise einer Hochgeschwindigkeitskamera mit hoher Ortsauflösung, verwendet werden.

**Patentansprüche**

1.  Verfahren zum Erfassen 3-dimensionaler Strömungsstrukturen, wobei gleichzeitig mindestens zwei, vorzugsweise drei, Lichtschnittebenen (9.1, 9.2, 9.3) unterschiedlicher Wellenlängen beziehungsweise Farben oder Lichtintensität in einem Strömungsmessfeld erzeugt werden, wobei das beim Durchqueren der Lichtschnittebene (9.1, 9.2, 9.3) von durch die Strömung bewegten Teilchen erzeugte Streulicht getrennt für jede Lichtschnittebene als Teilchenspur (23.1, 23.2, 23.3) optisch erfasst und farbkodiert oder intensitätskodiert aufgezeichnet wird, und wobei die erfassten Teilchenspuren (23.1, 23.2, 23.3) der Lichtschnittebenen zu einer Teilchenbahn (23) zusammengefasst und anhand der zusammengefassten Teilchenbahn (23) die drei Geschwindigkeitskomponenten ($v_x$, $v_y$, $v_z$) der Strömung berechnet werden.

2.  Verfahren nach Anspruch 1, wobei zwei Geschwindigkeitskomponenten ($v_x$, $v_y$) auf der Grundlage einer Belichtungszeit ($t_b$) und eines Abbildungsmaßstabes ($f_a$) einer optischen Aufnahmevorrichtung (15) berechnet werden.

3.  Verfahren nach Anspruch 1 oder 2, wobei eine Aufenthaltsdauer ($t_{bE2}$) eines Teilchens in zumindest einer Lichtschnittebene (9.1, 9.2, 9.3) erfasst und zur Ermittlung der dritten Geschwindigkeitskomponente ($v_z$) herangezogen wird.

4.  Verfahren nach Anspruch 2, wobei eine Lichtschnittebene (9.3) in einer der dritten Geschwindigkeitskomponente ($v_z$) zugeordneten dritten Richtung (z) asymmetrisch lichtintensitätsmoduliert wird, so dass anhand der erfassten Streulichtintensität der Aufenthaltsort des Teilchens ermittelt und damit die dritte Geschwindigkeitskomponente ($v_z$) berechnet wird.

5.  Verfahren nach Anspruch 1, wobei die Lichtschnittebenen (9.1, 9.2, 9.3) parallel und räumlich versetzt zueinander erzeugt werden.

6.  Verfahren nach Anspruch 1, wobei das von durch die Strömung bewegten Teilchen erzeugte Streulicht für jede Lichtschnittebene (9.1, 9.2, 9.3) als Teilchenspur (23.1, 23.2, 23.3) in einem Einzelbild (25.1, 25.2, 25.3) optisch erfasst wird, und die Einzelbilder (25.1, 25.2, 25.3) in ein gemeinsames Bild (27) zusammengesetzt werden, aus dem sich die Teilchenbahn (23) ergibt.

7.  Vorrichtung zum Erfassen 3-dimenionaler Strömungsstrukturen mit mindestens einer Lichtquelle (3) und einer Optik (7.1, 7.2, 7.3), die derart ausgebildet sind, dass gleichzeitig eine erste und mindestens eine weitere, zu der ersten Lichtschnittebene (9.1) parallele, räumlich versetzte Lichtschnittebene (9.2, 9.3) erzeugbar sind, sowie mit einer Aufnahmevorrichtung (15) und einer Auswerte- und Steuereinrichtung (21), wobei sich das Licht der ersten Lichtschnittebene (9.1) hinsichtlich Wellenlänge oder Farbe oder Lichtintensität von dem Licht der zweiten Lichtschnittebene (9.2, 9.3) unterscheidet, und wobei die Aufnahmevorrichtung (15) Streulicht, das ein Teilchen beim Durchqueren der mindestens zwei Lichtschnittebenen (9.1, 9.2, 9.3) erzeugt, erfasst.

8. Vorrichtung nach Anspruch 7, wobei der ersten Lichtschnittebene (9.1) eine Aufnahmevorrichtung (15.1) zugeordnet ist, und dass der mindestens einen weiteren Lichtschnittebene (9.2, 9.3) eine weitere Aufnahmevorrichtung (15.2, 15.3) zugeordnet ist.

9. Vorrichtung nach Anspruch 7, wobei eine erste Lichtquelle vorgesehen ist, die die erste Lichtschnittebene (9.1) erzeugt, und dass eine weitere Lichtquelle vorgesehen ist, die eine weitere Lichtschnittebene (9.2, 9.3) erzeugt.

10. Vorrichtung nach Anspruch 7, wobei eine einzige Lichtquelle (3), insbesondere ein Laser, vorgesehen ist, die Licht unterschiedlicher Wellenlänge ausstrahlt.

11. Vorrichtung nach Anspruch 7, wobei ein Mittel, insbesondere eine Braggzelle (BZ), vorgesehen ist, mit der das Licht der Lichtquelle (3) zeitabhängig intensitätsmodulierbar ist.

12. Vorrichtung nach Anspruch 7, wobei mehrere Lichtquellen, insbesondere Laser, vorgesehen sind, die jeweils eine andere Wellenlänge aufweisen und jeweils eine andere Lichtschnittebene (9.1, 9.2, 9.3) erzeugen.

13. Vorrichtung nach Anspruch 7, wobei ein Mehrfarben-Laser und eine Farbteilereinrichtung (5) vorgesehen sind, und die Farbteilereinrichtung (5) mehrere Farben trennt und den entsprechenden Lichtschnittebenen (9.1, 9.2,' 9.3) zuführt.

14. Vorrichtung nach Anspruch 7, wobei die Aufnahmevorrichtung ein CCD-Feld aufweist.

15. Vorrichtung nach Anspruch 7, **dadurch gekennzeichnet, dass** der Aufnahmevorrichtung (15) eine Justiereinrichtung (17) zum Fokussieren auf eine Lichtschnittebene (9) zugeordnet ist.

16. Vorrichtung nach Anspruch 14, wobei dem CCD-Feld ein Filter oder ein Monochromator (19) vorgeschaltet ist.

17. Vorrichtung nach Anspruch 7, wobei eine Mehrzahl von Aufnahmevorrichtung (15.1, 15.2, 15.3) vorgesehen ist, denen eine Strahlteilervorrichtung (13) vorgeschaltet ist, die das von den Lichtschnittebenen (9.1, 9.2, 9.3) kommende Licht teilt und den entsprechenden Aufnahmevorrichtungen (15.1, 15.2, 15.3) zuführt.

18. Vorrichtung nach Anspruch 17, wobei der Strahlteilervorrichtung (13) ein Objektiv (11) vorgeschaltet ist.

19. Vorrichtung nach Anspruch 7, wobei die Aufnahmevorrichtung (15) eine Farbvideo- oder Farbfotokamera, insbesondere eine Hochgeschwindigkeitskamera mit hoher Ortsauflösung, umfasst.

20. Vorrichtung nach Anspruch 7, wobei das Licht einer Lichtschnittebene (9.1, 9.2, 9.3) in der zu der Ebene senkrechten Richtung (z) asymmetrisch intensitätsmoduliert ist, wobei der Intensitätsverlauf die Form einer halben Gauss-Kurve aufweist.

**Claims**

1. Method for detecting three-dimensional flow structures, at least two, preferably three, light section planes (9.1, 9.2, 9.3) of different wavelengths or colours of light intensity are produced in a flow measuring field, the scattered light generated during the traversal of the light section plane (9.1, 9.2, 9.3) by particles moved by the flow being optically detected separately for each light section plane as a particle trace (23.1, 23.2, 23.3) and being recorded by colour coding or intensity coding, and the detected particle traces (23.1, 23.2, 23.3) of the light section planes being combined to form a particle track (23), and the three velocity components ($v_x$, $v_y$, $v_z$) of the flow being calculated with the aid of the combined particle track (23).

2. Method according to Claim 1, in which two velocity components ($v_x$, $v_y$) are calculated on the basis of an exposure time ($t_b$) and of a reproduction scale ($f_a$) of an optical recording device (15).

3. Method according to Claim 1 or 2, in which a residence time ($t_{bE2}$) of a particle in at least one light section plane (9.1, 9.2, 9.3) is detected and used to determine the third velocity component ($v_z$).

4. Method according to Claim 2, in which a light section plane (9.3) is modulated asymmetrically for light intensity in a third direction (z) assigned to the third velocity component ($v_z$), such that the residence site of the particle is determined with the aid of the detected scattered light intensity, and the third velocity component ($v_z$) is calculated thereby.

5. Method according to Claim 1, in which the light section planes (9.1, 9.2, 9.3) are produced in a fashion parallel to and spatially offset from one another.

6. Method according to Claim 1, in which the scattered light generated by particles moved by the flow is optically detected for each light section plane (9.1, 9.2, 9.3) as a particle trace (23.1, 23.2, 23.3) in a single image (25.1, 25.2, 25.3), and the single images (25.1, 25.2, 25.3) are assembled into a common image (27) from which the particle track (23) results.

7. Apparatus for detecting three-dimensional flow structures with the aid of at least a light source (3) and an optical system (7.1, 7.2, 7.3) which are designed in such a way that it is possible to produce simultaneously a first and at least one further light section plane (9.2, 9.3) parallel to the first light section plane (9.1) and spatially offset, and having a recording device (15) and an evaluation and control device (21), the light of the first light section plane (9.1) differing with regard to wavelength or colour or light intensity from the light of the second light section plane (9.2, 9.3), and in which the recording device (15) detects scattered light which a particle generates during the traversal of the at least two light section planes (9.1, 9.2, 9.3).

8. Apparatus according to Claim 7, in which the first light section plane (9.1) is assigned a recording device (15.1) and in which the at least one further light section plane (9.2, 9.3) is assigned a further recording device (15.2, 15.3).

9. Apparatus according to Claim 7, in which a first light source is provided which produces the first light section plane (9.1) and in which a further light source is provided which produces a further light section plane (9.2, 9.3).

10. Apparatus according to Claim 7, in which a single light source (3), in particular a laser, is provided which emits light of different wavelengths.

11. Apparatus according to Claim 7, in which a means, in particular a Bragg cell (BZ), is provided with the aid of which the light from the light source (3) can be modulated for intensity as a function of time.

12. Apparatus according to Claim 7, in which a plurality of light sources, in particular lasers, are provided which have a different wavelength in each case and produce a different light section plane (9.1, 9.2, 9.3) in each case.

13. Apparatus according to Claim 7, in which a multicolour laser and a colour splitter (5) are provided, and the colour splitter (5) separates a plurality of colours and feeds them to the corresponding light section planes (9.1, 9.2, 9.3).

14. Apparatus according to Claim 7, in which the recording device has a CCD field.

15. Apparatus according to Claim 7, in which the recording device (15) is assigned an adjusting device (17) for focusing onto a light section plane (9).

16. Apparatus according to Claim 14, in which a filter or a monochromator (19) is connected upstream of the CCD field.

17. Apparatus according to Claim 7, in which a plurality of recording devices (15.1, 15.2, 15.3) are provided upstream of which there is connected a beam splitter (13) which splits the light coming from the light section planes (9.1, 9.2, 9.3) and feeds it to the corresponding recording devices (15.1, 15.2, 15.3).

18. Apparatus according to Claim 17, in which a lens (11) is connected upstream of the beam splitter (13).

19. Apparatus according to Claim 7, in which the recording device (15) comprises a colour video camera or colour photographic camera, in particular a highspeed camera with high spatial resolution.

20. Apparatus according to Claim 7, in which the light of a light section plane (9.1, 9.2, 9.3) is asymmetrically modulated for intensity in the direction (z) perpendicular to the plane, the intensity profile having the shape of a half Gaussian curve.

**Revendications**

1. Procédé de saisie de structure de courant de fluide à trois dimensions, selon lequel

    - on génère simultanément au moins deux et de préférence trois plans de coupe de lumière (9.1, 9.2, 9.3) de longueurs d'ondes ou de couleur ou d'intensité lumineuse différentes dans un champ de mesure de courant de fluide,
    - on saisit optiquement, séparément pour chaque plan de coupe de lumière, comme trace de particule (23.1, 23.2, 23.3) la lumière diffractée lors du passage des plans de coupe de lumière (9.1, 9.2, 9.3) produite par les particules déplacées dans le courant, et on l'enregistre avec un codage en couleur ou en intensité, et
    - on regroupe dans une trajectoire de particules (23) les traces de particules saisies (23.1, 23.2, 23.3) des plans de coupe lumineux, et à l'aide de la trajectoire de particules (23) regroupée, on calcule les trois composantes de vitesse ($v_x$, $v_y$, $v_z$) du courant de fluide.

2. Procédé selon la revendication 1, selon lequel on calcule deux composantes de vitesse ($v_x$, $v_y$) sur la base d'un temps d'éclairage ($t_b$) et d'une mesure d'image ($f_a$) d'un dispositif de réception optique (15).

3. Procédé selon la revendication 1 ou 2, selon lequel on utilise une durée de séjour ($t_{bE2}$) d'une particule dans au moins un plan de coupe lumineux (9.1, 9.2, 9.3) et on l'utilise pour déterminer la troisième composante de vitesse ($v_z$).

4. Procédé selon la revendication 2, selon lequel on module en intensité lumineuse de manière asymétrique un troisième plan de coupe de lumière (9.3) dans une troisième direction (z) associée à la troisième composante de vitesse ($v_z$) de façon qu'à partir de l'intensité de la lumière dispersée saisie, on détermine le point de séjour de la particule et on calcule ainsi la troisième composante de vitesse ($V_z$).

5. Procédé selon la revendication 1, selon lequel on génère les plans de coupe de lumière (9.1, 9.2, 9.3) de façon parallèle et décalée dans l'espace les uns par rapport aux autres.

6. Procédé selon la revendication 1, selon lequel on saisit optiquement la lumière diffractée générée par les particules déplacées par le courant de fluide pour chaque plan de coupe de lumière (9.1, 9.2, 9.3) comme traces de particules (23.1, 23.2, 23.3) dans une image unique (25.1, 25.2, 25.3), et les différentes images (25.1, 25.2, 25.3) sont composées pour donner une image globale (27) à partir de laquelle on obtient la trajectoire des particules (23).

7. Dispositif de saisie de structure de courant de fluide à trois dimensions avec au moins une source lumineuse (3) et une optique (7.1, 7.2, 7.3) réalisées de façon à générer en même temps un premier et au moins un autre plan de coupe de lumière (9.2, 9.3) décalé dans l'espace, parallèlement au premier plan de coupe de lumière (9.1), et avec un dispositif de réception (15) et une installation d'exploitation et de commande (21), dans lequel la lumière du premier plan de coupe (9.1) se distingue par la longueur d'onde ou la couleur ou l'intensité lumineuse par rapport à la lumière du second plan de coupe de lumière (9.2, 9.3), et le dispositif de réception (15) saisit la lumière diffractée générée par chaque particule traversant au moins deux plans de coupe de lumière (9.1, 9.2, 9.3).

8. Dispositif selon la revendication 7, selon lequel le premier plan de coupe de lumière (9.1) comporte un dispositif de réception (15.1) et au moins un autre plan de coupe de lumière (9.2, 9.3) comporte un autre dispositif de réception (15.2, 15.3).

9. Dispositif selon la revendication 7, selon lequel il est prévu une première source lumineuse générant le premier plan de coupe de lumière (9.1) et une autre source lumineuse qui génère un autre plan de coupe de lumière (9.2, 9.3).

10. Dispositif selon la revendication 7, selon lequel il est prévu une unique source de lumière (3), notamment un laser, qui émet de la lumière suivant des longueurs d'ondes différentes.

11. Dispositif selon la revendication 7, selon lequel il est prévu au moins une cellule de Bragg (BZ) avec laquelle on module la source lumineuse (3) en intensité en fonction du temps.

12. Dispositif selon la revendication 7, comportant plusieurs sources lumineuses, notamment des sources laser qui ont chaque fois une autre longueur d'onde et génèrent chaque fois un autre plan de coupe de lumière (9.1, 9.2, 9.3).

13. Dispositif selon la revendication 7, selon lequel il est prévu un laser à plusieurs couleurs et une installation de division de couleur et l'installation de division de couleur (5) sépare plusieurs couleurs et les fournit aux différents plans de coupe de lumière (9.1, 9.2, 9.3).

14. Dispositif selon la revendication 7, selon lequel le dispositif de réception comporte un champ CCD.

15. Dispositif selon la revendication 7, **caractérisé en ce que** le dispositif de réception (15) comporte un dispositif d'ajustage (17) pour focaliser dans un plan de coupe de lumière (9).

16. Dispositif selon la revendication 14, selon lequel

un filtre ou un monochromateur (19) précède le champ CCD.

**17.** Dispositif selon la revendication 7, comportant plusieurs dispositifs de réception (15.1, 15.2, 15.3) précédés par le dispositif de division de faisceaux (13) qui divise la lumière venant des plans de coupe de lumière (9.1, 9.2, 9.3) et alimente les dispositifs de réception correspondants (15.1, 15.2, 15.3).

**18.** Dispositif selon la revendication 17, selon lequel le dispositif de division de faisceaux (13) est précédé par un objectif (11).

**19.** Dispositif selon la revendication 7, selon lequel le dispositif de réception (15) comprend une caméra vidéo ou photocouleur, notamment une caméra à grande vitesse à forte résolution locale.

**20.** Dispositif selon la revendication 7, selon lequel la lumière d'un plan de coupe de lumière (9.1, 9.2, 9.3) est modulée en intensité de manière asymétrique dans la direction (z) perpendiculaire au plan et la courbe d'intensité a la forme d'une demi-courbe de Gauss.

Farbteiler

Lichtschnittebenen

Fig. 1a

E1  E2  E3

7.1  7.2  7.3

5

Braggzelle

BZ

1    3    2

Ar-Ionen-Laser

Pfeilgenerator

9.1

15.1

C1  T2  T1

Trigger

17.1

17.3

B1

19

19

C3

y

ST

15.3

11

Strahlteiler

Objekt

13

B2

9.2  z  9.3

C2

19

17.2

15.2

y    x

21

23.1

23.2

B1    23

Σ

23.3

B2

C1 - E1    C2 - E2    C3 - E3

PC mit Framegrabber

Fig. 1b

25.1    25.2    25.3

27

EP 0 829 726 B1

9

a)

E1
E2
E3

SE2z

C1    C2

C3

Strahlteiler + Interferenzfilter
mit Videokameras

b)

C1 - E1          C2 - E2          C3 - E3

Fig. 2

c)                23

t = 0                          Sx

Sy        SE2-tbE2            t+tbE2
          Sxy
          Sxy~tb                        t-tb

Vx == Sx/tb*fa
Vy == Sy/tb*fa
Vz == SE2z/tbE2

d)

$\sum_y$

x

Fig. 3